Europäisches Patentamt

European Patent Office

Office européen des brevets

(19)

(11) Veröffentlichungsnummer: **0 216 261**
**B1**

(12) **EUROPÄISCHE PATENTSCHRIFT**

(45) Veröffentlichungstag der Patentschrift: **28.11.90**

(21) Anmeldenummer: **86112559.9**

(22) Anmeldetag: **10.09.86**

(51) Int. Cl.⁵: **B 23 Q 7/00,** B 23 Q 7/04,
B 23 Q 3/157

(54) **Werkzeugmaschine.**

(30) Priorität: **17.09.85 DE 3533088**
**18.06.86 DE 3620343**

(43) Veröffentlichungstag der Anmeldung:
**01.04.87 Patentblatt 87/14**

(45) Bekanntmachung des Hinweises auf die
Patenterteilung:
**28.11.90 Patentblatt 90/48**

(84) Benannte Vertragsstaaten:
**CH FR GB IT LI SE**

(56) Entgegenhaltungen:
**EP-A-0 076 231       DE-A-3 344 903**
**EP-A-0 088 644       GB-A-1 263 912**
**EP-A-0 088 645       GB-A-1 566 444**
**EP-A-0 106 081       GB-A-2 125 715**
**CH-A- 647 709**

**WERKSTATTSTECHNIK, ZEITSCHRIFT FÜR**
**INDUSTRIELLE FERTIGUNG, Band 65, Nr. 3,**
**März 1975, Seiten 117-123, Springer-Verlag,**
**Berlin, DE; G. SPUR et al.: "Die automatische**
**Handhabung bei flexiblen Fertigungszellen"**

(73) Patentinhaber: **Chiron-Werke GmbH**
**Talstrasse 23**
**D-7200 Tuttlingen (DE)**

(72) Erfinder: **Winkler, Hans-Henning, Dr.-Ing.**
**Brunnentalstrasse 88**
**D-7200 Tuttlingen (DE)**
Erfinder: **Rütschle, Eugen, Dipl.-Ing.**
**Schönenbergstrasse 20**
**D-7202 Mühlheim (DE)**

(74) Vertreter: **Witte, Alexander, Dr.-Ing.**
**Witte, Weller & Hilgenfeldt Patent- und**
**Rechtsanwälte Augustenstrasse 7**
**D-7000 Stuttgart 1 (DE)**

Courier Press, Leamington Spa, England.

**Beschreibung**

Die Erfindung betrifft eine Bohr- und Fräsmaschine mit einem entlang mehrer Achsen relativ zu einem Werkstücktisch bewegbaren Spindelstock, mit einem Werkzeugmagazin und Mitteln, vermittels derer Werkzeuge mit genormtem Außenkonus aus einer Magazinstellung im Werkzeugmagazin in eine Arbeitsstellung einer Aufnahme des Spindelstocks mit genormtem Innenkonus bringbar sind oder umgekehrt, wobei im Arbeitsraum des Spindelstocks mindestens ein Werkstückmagazin zur Aufnahme von Werkstükken vorgesehen ist und mindestens eines der Werkzeuge als Greifelement ausgebildet ist zum Ergreifen eines der Werkstücke in dem Werkstückmagazin und zum Überführen in eine auf dem Werkstücktisch angeordnete Bearbeitungsstation zum Halten des Werkstücks für dessen unmittelbar nachfolgende Bearbeitung mittels eines der Werkzeuge.

Eine derartige Maschine ist aus der EP-A-0 088 645 bekannt, die den mächstliegenden Nand der Technik beschreibt.

Bei der bekannten Werkzeugmaschine ist der Spindelstock entlang dreier kartesischer Koordinatenachsen verfahrbar. An der Spindelstock ist einerseits eine vertikalachsige, mit einem Drehantrieb versehene Spindel zum alternativen Einspannen üblicher Werkzeuge oder eines Werkstückhalters und andererseits in einer um 90° seitlich versetzten Position eine Greiferanordnung angeordnet, die in einer vertikalen Achse verfahrbar ist und ebenfalls zum Ergreifen von Werkstücken dient.

Wenn mit der bekannten Werkzeugmaschine Werkstücke nacheinander ergriffen, transportiert und bearbeitet werden sollen, so muß zwischen den Schritten des Transportierens und Absetzens einerseits und des Bearbeitens andererseits der Spindelstock verfahren werden. Der Spindelstock muß nämlich zunächst das zuvor benutzte Werkzeug im Werkzeugmagazin absetzen. Durch erneutes Verfahren des Spindelstocks muß dann die Spindel zu einer Speicherposition des Werkzeughalters verfahren und der Werkzeughalter muß dort mittels der Spindel unmittelbar ergriffen werden. Die Spindel muß nun ein weiteres Mal vom Werkstückmagazin verfahren werden, um dort ein Werkstück zu ergreifen. Die Spindel wird dann ein weiteres Mal verfahren, um das Werkstück in der Bearbeitungsposition abzusetzen. Die Spindel muß nun erneut in die Speicherposition des Werkstückhalters verfahren werden, um den Werkstückhalter dort abzusetzen. Die Spindel muß dann ein weiteres Mal verfahren werden, um das als nächstes benötigte Werkzeug wieder im Werkzeugmagazin abzuholen und einzuspannen. Die Spindel muß dann zur Bearbeitungsposition zurückkehren, um das dort verbliebene Werkstück mittels des jetzt eingespannten Werkzeugs zu bearbeiten. Es liegt auf der Hand. daß durch diese zeitliche Abfolge sehr lange Span-zu-Spanzeiten entstehen.

Bei einer weiteren. aus der DE-B-28 52 846 bekannten Maschine ist eine um eine horizontale Achse drehbare Spindel vorgesehen, oberhalb der sich ein revolverartig um eine Hochachse drehbares Werkzeugmagazin befindet. Um eine zur Spindelachse parallele Achse oberhalb der Spindel ist ein zweiarmiger Greifer drehbar, der Werkzeuge aus dem Werkzeugmagazin entnehmen und in eine Aufnahme des Spindelstocks einsetzen kann bzw. umgekehrt. Vor dem Spindelstock befindet sich ein längs einer Horizontalachse senkrecht zur Spindelachse verschiebbarer Tisch, auf dem sich eine oder mehrere Werkstückpaletten befinden. Die Werkstücke werden mittels eines in die Spindel eingespannten Werkzeuges bearbeitet, während sie sich auf der Werkstückpalette befinden.

Um eine Werkstückpalette mit bearbeiteten Werkstücken gegen eine neue Werkstückpalette mit noch unbearbeiteten Werkstücken austauschen zu können, ist bei der bekannten Maschine vorgesehen, statt eines üblichen Bearbeitungswerkzeuges einen Palettengreifer einzuwechseln, der wie ein übliches Werkzeug in die Aufnahme der Spindel einsetzbar ist und an seinem vorderen Ende ein hakenartiges Gebilde trägt. Dieses hakenartige Gebilde ist passend zu einem entsprechenden Gegenstück an der Werkstückpalette ausgebildet. Der in die Spindel eingewechselte Palettengreifer kann nun dazu benutzt werden, um die Werkstückpalette mit bearbeiteten Werkstücken aus ihrer Halterung auf dem quer verschiebbaren Tisch auf eine Plattform zu verschieben, die sich in Verlängerung der Spindelachse, von der Spindel aus gesehen, hinter der Werkstückpalette befindet. In entsprechender Weise kann eine Werkstückpalette mit noch unbearbeiteten Werkstücken mittels des Palettengreifers von dieser Plattform auf den quer verschiebbaren Tisch zur Spindel hin gezogen werden.

Eine ähnliche Maschine ist aus der US-A-4 090 287 bekannt.

Auch bei dieser bekannten Maschine ist eine horizontalachsige Spindel vorgesehen, in die anstelle üblicher Werkzeuge eine Überführungsstange mit einem Haken an ihrem vorderen Ende eingewechselt werden kann. Auch in diesem Falle dient die Überführungsstange dazu, um Werkstückpaletten, die mit einem entsprechenden Gegenstück versehen sind, in Richtung der Spindelachse von einer Vorratsplattform auf eine Arbeitsplattform, und umgekehrt, verschieben zu können.

Bei den beiden vorstehend geschilderten Maschinen findet somit lediglich ein Formschluß zwischen dem Palettengreifer und der Palette statt, der auch vollkommen ausreicht, weil lediglich die Werkstückpaletten in Richtung der Spindelachse verschoben werden müssen.

Die beiden bekannten Maschinen gestatten daher lediglich, eine Vielzahl von auf den Paletten angeordneten Werkstücken, die in ihrer Palettenposition fixiert sind, zu bearbeiten. Dies grenzt die Freiheitsgrade bei der Bearbeitung der Werkstücke in manchen Anwendungsfällen erheblich ein, weil bei einer mit Werkstücken dicht gepackten Werkstückpalette die einzelnen Werkstücke nicht von allen Seiten gleich gut zugänglich sind und daher im allgemeinen Bearbeitsvorgänge an solchen auf Paletten zugeführten Werkstücken nur aus einer einzigen Richtung möglich sind. Diese Einschränkung steht jedoch im Gegensatz zu der eigentlichen Zielrichtung dieser Art von Maschinen, wie sie üblicherweise auch als "Bearbeitungszentren" bezeichnet werden. Bei derartigen Bearbeitungszentren, die als Bohr- und Fräsmaschinen zur spanabhebenden Bearbeitung von Werkstücken vorgesehen sind, wird durch eine Vielzahl einwechselbarer Werkzeuge angestrebt, das Werkstück in einer einzigen Einspannung möglichst vollkommen, d.h. mit allen anfallenden Bearbeitungsschritten, zu bearbeiten. Dieses angestrebte Ziel dient nicht nur dazu, die Bearbeitungszeit ingesamt zu verringern, sie strebt auch eine Erhöhung der Bearbeitungsgenauigkeit an, weil das in einer einzigen Einspannung verbleibende Werkstück naturgemäß genauer bearbeitet werden kann, als dies der Fall ist, wenn das Werkstück mehrfach umgespannt werden muß.

Aus der EP-A-0 076 231 ist ein Montageautomat bekannt, bei dem ein entlang dreier kartesischer Koordinaten verfahrbarer Montageroboter auf einem Portal angeordnet ist, das ein Förderband für Werkstückpaletten überspannt.

Auf der einen Seite des Förderbandes ist eine karussellartige Montageplatte und auf der gegenüberliegenden Seite ist ein Werkzeugmagazin angeordnet. Der Montageroboter kann alternativ mit einer Greifzange oder einem Werkzeug, beispielsweise einem Schraubenzieher oder einem Elektromagneten, bestückt werden.

Der bekannte Montageroboter ist indes nur zum Ausführen von leichten Bearbeitungsoperationen geeignet, im wesentlichen also zum Ausführen von Montage und Fügearbeiten, während eine spanabhebende Bearbeitung der Werkstücke weder vorgesehen noch — mangels Kühl- und Spanabfördereinrichtungen — möglich ist. Außerdem ist es bei dem bekannten Montageroboter erforderlich, beim Übergang von einer Greifzange als Werkzeug zu einem anderen Werkzeug den Roboter so zu verfahren, daß die Werkzeuge am Ort des Werkzeugmagazins gewechselt werden. Dies führt einerseits zu Zeitverlusten, weil nach dem Absetzen eines Werkstückes auf der karussellartigen Montageplatte der gesamte Montageroboter in die Nähe des Werkzeugmagazins verfahren werden muß, andererseits ergeben sich aber auch die bereits erwähnten Ungenauigkeiten, weil zwischen dem Vorgang des Positionierens eines Werkstücks und dem Vorgang des nachfolgenden Bearbeitens der Montageroboter entlang mehrerer Achsen verfahren werden muß und daher die Bearbeitungsgenauigkeit von der Anfahr-Wiederholgenauigkeit des Montageroboters abhängt. Auch dies ist ein Grund dafür, warum der bekannte Montageroboter lediglich für leichte Bearbeitungsoperationen der genannten Art, nicht jedoch für präzise spanabhebende Bearbeitungsaufgaben eingesetzt werden kann.

Aus der GB-A-1 263 912 ist eine weitere Werkzeugmaschine bekannt, bei der eine Vielzahl von Paletten vorgesehen ist, um Werkzeuge, Werkstücke, Spannvorrichtungen usw. aufzunehmen. Eine Beförderung von Werkstücken mittels eines in die übliche Spindelaufnahme eingewechselten Greiferelementes mit nachfolgender Bearbeitung an derselben Stelle ist bei dieser bekannten Werkzeugmaschine ebenfalls nicht vorgesehen.

Aus der GB-A-1 566 444 ist eine weitere Werkzeugmaschine bekannt, bei der Werkzeuge in raumfesten Werkzeugmagazinen angeordnet sind und dort von Spindeln abgeholt werden können, die entlang mehrerer Koordinaten verfahrbar sind. Einige der Werkzeuge sind dabei als spanabhebende Bearbeitungswerkzeuge (Bohrer), andere als Montagewerkzeuge (Schraubendreher) und weitere schließlich als Greif- und Fügeelemente (zum Ergreifen, Transportieren und Einsetzen von Stiften und Nieten) ausgebildet.

Bei dieser bekannten Werkzeugmaschine ist indes jeder Art von "Werkzeugen" der vorstehend genannten Arten eine eigene Spindel zugeordnet, so daß beispielsweise die Bohrwerkzeuge in einer ersten Spindel, die Montagewerkzeuge in einer zweiten Spindel und die Greif/Fügewerkzeuge in einer dritten Spindel eingespannt werden und jede Spindel auf die Besonderheiten des jeweils erforderlichen Antriebes hin ausgelegt ist.

Auch bei dieser bekannten Werkzeugmaschine ist somit ein Werkstücktransport mit nachfolgender Bearbeitung in derselben Position nicht möglich.

In der EP-A-0 088 644 ist eine Werkzeugmaschine beschrieben, die mit zwei kooaxialen Spindeln versehen ist, deren Aufnahmen sich aufeinander zu öffnen. Die Spindeln sind in dieser kooaxialen Stellung fixiert und lediglich in ihrer gemeinsamen Achse aufeinander zu bewegbar. Ein Wechselarm ist um eine zur gemeinsamen Spindelachse parallele Achse drehbar und auf dieser parallelen Achse auch verschiebbar. Der Wechselarm hat drei Funktionen: Zum einen dient er dazu, Werkzeuge in eine der Spindeln einzuspannen, wozu er diese Werkzeuge aus einem Werkzeugmagazin entnimmt, das auf der den Spindeln gegenüberliegenden Seite der parallelen Achse angeordnet ist. Zum anderen hat der Wechselarm die Funktion, in die jeweils andere Spindel einen Werkstückhalter einzusetzen, den er ebenfalls aus einem entsprechend positionierten Werkstückhaltermagazin entnimmt. Schließlich hat der Wechselarm die Funktion, ein Werkstück aus einem Werkstückmagazin zu entnehmen und in den bereits in eine der Spindeln eingesetzten Werkstückhalter einzuführen. Beim Betrieb der bekannten Maschine ist jeweils eine der Spindeln in Drehrichtung arretiert, während sich die andere Spindel dreht. Soll z.B. ein Werkstück abgedreht werden, so wird der Werkstückhalter mitsamt dem Werkstück in die rotierende Spindel eingesetzt, während der mit einem Drehstahl bestückte Werkzeughalter in die drehstarr arretierte Spindel eingesetzt wurde. Wenn jedoch das Werkstück gefräst werden soll, ist die Anordnung entsprechend umgekehrt, so daß das Werkstück stillsteht und sich der Fräser dreht. Die Werkstückhalter weisen dabei Spannbacken auf, mit denen sie die vom Wechselarm angebotenen Werkstücke festhalten können. Die Spannbacken werden in der betreffenden Spindel mittels einer axialen Stange betätigt, die mittels einer geeigneten Betätigungseinheit axial verschiebbar ist.

Diese bekannte Werkzeugmaschine hat damit den Nachteil, daß zum aufeinanderfolgenden Ausführen von Bearbeitungsschritten ggf. ein mehrfaches Umspannen der Werkzeuge bzw. des Werkstücks erforderlich ist, außerdem ist die Variabilität der Werkzeugmaschine durch die starre Positionierung der Spindeln zueinander stark eingeschränkt, andererseits aber auch erforderlich, um die geschilderten Wechselvorgänge vornehmen zu können.

Aus der CH-A-647 709 ist eine Werkzeugmaschine mit Werkzeugwechsler bekannt, bei der eines der Werkzeuge als Greifelement ausgebildet sein kann. Dieses Greifelement ist mit einer Auskleidung aus Gummi versehen, um Werkstücke formschlüssig ergreifen zu können.

Damit hat diese Werkzeugmaschine den Nachteil der bereits eingangs geschilderten Werkzeugmaschine, daß nämlich durch das formschlüssige Ergreifen lediglich eine einzige Transportaufgabe gelöst werden kann und bei unterschiedlichen Werkstücken somit auch unterschiedliche Elemente erforderlich sind. Weiterhin weist auch diese bekannte Werkzeugmaschine den bereits geschilderten Nachteil auf, daß ein Wechsel zwischen Greifelement und Werkzeug für das nachfolgende Bearbeiten stets mit einem Verfahren des Spindelstocks verbunden ist.

Aus der DE-A-3 344 903 ist eine Greiferanordnung für einen Industrieroboter bekannt, bei der preßluftbetätigte Greifer über Schnellkupplungen gekuppelt werden können, die auch Versorgungsleitungen für die Preßluft enthalten.

Die bekannte Anordnung ist indes für spanabhebende Bohr- und Fräszentren weder vorgesehen noch geeignet, schon allein deswegen, weil sie lediglich für das Einsetzen unterschiedlicher Greifer, nicht jedoch für das Einsetzen und Antreiben von Werkzeugen geeignet ist.

Aus der GB-A-2 125 715 ist eine Schleif- und Poliermaschine bekannt, bei der verschiedene, mit einem genormten Außenkonus versehene Schleifspindeln in eine zugehörige Aufnahme einspannbar sind. Die Schleifspindeln sind dabei mit einem Preßluftantrieb versehen, dessen Verbindungsleitung axial durch die Spindel hindurch führt.

Schließlich ist aus der EP-A-0 106 081 eine Werkzeugmaschine bekannt, bei der ein Werkzeugmagazin am Spindelstock angeordnet und mit diesem verfahrbar ist. Über eine Mehrzahl von Greifarmen können Werkzeuge aus einer von der Spindelaufnahme beabstandeten Magazinstellung in die Spindelaufnahme eingespannt werden oder umgekehrt. Ein Werkstücktransport ist bei dieser bekannten Werkzeugmaschine nicht vorgesehen.

Der Erfindung liegt demgegenüber die Aufgabe zugrunde, eine Werkzeugmaschine der eingangs genannten Art dahingehend weiterzubilden, daß nicht nur ein Werkzeugwechsel sondern auch ein Werkstückwechsel durch Verfahren des Spindelstocks möglich wird, wobei einerseits die Wechselzeiten beim Werkstück- und nachfolgenden Werkzeugwechsel minimal sind und andererseits die Genauigkeit der dem Werkstückwechsel unmittelbar nachfolgenden Bearbeitung besonders hoch ist.

Diese Aufgabe wird erfindungsgemäß dadurch gelöst, daß das Werkzeugmagazin am Spindelstock angeordnet ist, daß mindestens zwei Greifarme vorgesehen sind, die im Gegentaktbetrieb ein Werkzeug oder das Handhabungselement aus dem Werkzeugmagazin entnehmen und in die Aufnahme des Spindelstocks einsetzen bzw. umgekehrt, und daß das Handhabungselement als Greifelement ausgebildet ist mit fremdkraftbetätigten Spannbacken zum Ergreifen eines Werkstücks in dem Werkstückmagazin und zum Überführen in eine auf dem Werkstücktisch angeordnete Bearbeitungsstation zum Halten des Werkstücks für dessen unmittelbar nachfolgende Bearbeitung mittels des Werkzeuges, wobei die Aufnahme des Spindelstocks ein Verbindungselement enthält, das bei in die Aufnahme eingesetztem Greifelement eine im Spindelstock angeordnete Druckmittelleitung mit einem druckmittelbetriebenen Antrieb des Greifelementes verbindet.

Die der Erfindung zugrundeliegende Aufgabe wird auf diese Weise vollkommen gelöst.

Im Gegensatz zu den bekannten Handhabungselementen zum formschlüssigen Ergreifen von Paletten oder Werkstücken hat das erfindungsgemäß verwendete Greifelement mit fremdkraftbetätigten Spannbacken den Vorteil, daß mit ein- und demselben Element eine Vielzahl von unterschiedlich gestalteten Werkstücken ergriffen werden kann. Ferner ergibt sich die Möglichkeit, durch Variation bei der Betätigung der Spannbacken oder durch Verwendung unterschiedlicher Spannbacken verschiedene Spannkräfte und Spannarten (form- oder kraftschlüssig) vorzusehen. Weiterhin ergibt sich der Vorteil, daß durch die Anordnung des Werkzeugmagazins am Spindelstock die Position des Spindelstocks nach dem Absetzen des Werkstücks in der Bearbeitungsposition nicht geändert werden muß, weil nun mittels der beiden Greifarme das Greifelement im Gegentakt gegen ein Werkzeug ausgetauscht wird, während die axiale Lage des Spindelstocks unverändert bleibt.

Insgesamt ergibt sich damit der Vorteil, daß nicht nur der Werkzeugwechsel sondern auch der Werkstückwechsel mit maximaler Geschwindigkeit vonstatten geht, wobei gleichzeitig eine hohe Präzision der unmittelbar nachfolgenden Bearbeitung erreichbar ist.

Bei einer bevorzugten Weiterbildung der Erfindung ist die Druckmittelleitung am Umfang des Spindelstocks angeordnet. Diese Maßnahme hat den Vorteil, daß bereits vorhandene Werkzeugmaschinen leicht umgerüstet werden können, da lediglich eine Druckmittelleitung außen am Spindelstock herunter bis in den Bereich der Aufnahme des Spindelstocks geführt werden muß.

Bei einer anderen Variante dieses Ausführungsbeispiels ist die Druckmittelleitung in an sich bekannter Weise in der Drehachse des Spindelstocks angeordnet.

Diese Maßnahme erfordert zwar eine größere bauliche Veränderung der Werkzeugmaschine, sie eröffnet jedoch in vorteilhafter Weise die Möglichkeit, das Greifelement zu drehen, insbesondere durch den Spindelmotor, so daß das ergriffene Werkstück in beliebiger Weise um die Drehachse der Spindel während des Transports vom Werkstückmagazin in die Bearbeitungsposition verdreht werden kann.

Bei einem weiteren Ausführungsbeispiel der Erfindung ist vorgesehen, einen Drucksensor an die Druckmittelleitung anzuschließen.

Diese Maßnahme hat den Vorteil, daß in einfacher Weise und ohne zusätzliche Lagesensoren mit erforderlichen Anschlüssen erkannt werden kann, ob das Greifelement ein Werkstück ergriffen hat, weil bei mit Druckmittel beaufschlagter Druckmittelleitung davon ausgegangen werden kann, daß das Greifelement geschlossen ist.

Bei einem weiteren Ausführungsbeispiel der Erfindung ist eine Schrittsteuerung vorgesehen, um einen Spindelmotor derart zu steuern, daß die Spindel bei eingesetztem Greifelement dieses um einen vorgegebenen Winkelschritt dreht. Der Winkelschritt kann um die Drehachse der Spindel oder um eine dazu senkrechte Achse erfolgen.

Diese Maßnahme hat den Vorteil, daß für einfache Drehoperationen von Werkstücken aufwendige Teilapparate eingespart werden können. Dies ist beispielsweise dann möglich, wenn in der Bearbeitungsstation ein Spannzeug mit zwei Spannbacken zur Aufnahme des Werkstückes und zum Halten während der Bearbeitung vorgesehen ist und das Werkstück lediglich um 90° oder 180° um eine Koordinatenachse gedreht werden muß, um die nachfolgende Bearbeitung durchzuführen. Selbstverständlich kann diese Drehung auch in mehreren Schritten unter zwischenzeitlichem Halten des Werkstücks durch das Spannzeug erfolgen, um beispielsweise ein Werkstück auf den Kopf zu stellen. Es versteht sich, daß auch andere definierte Winkelschritte von beispielsweise 45°, 60° oder dgl. ausgeführt werden können.

Bei einer Variante dieses Ausführungsbeispiels sind Kupplungen im Spindelstock vorgesehen, um wahlweise den Winkelschritt um die Drehachse oder die dazu senkrechte Achse auszuführen.

Diese Maßnahme hat den Vorteil. daß die Antriebskraft für das Drehen des Greifelementes unabhängig davon, um welche Achse gedreht werden soll, vom Spindelmotor abgeleitet werden kann, wobei dann eine radial wirkende Kupplung und eine weitere, axial wirkende Kupplung eingesetzt werden, um die Drehbewegung der Spindel entweder in der gleichen Achse oder einer dazu senkrechten Achse zu nutzen. Es versteht sich jedoch, daß die Drehbewegung des Greifelementes auch mittels der Fremdkraft durchgeführt bzw. gesteuert werden kann, die zum Betätigen der Spannbacken ohnehin dem Greifelement zugeführt wird.

Bei einem anderen Ausführungsbeispiel der Erfindung sind die Spannbacken mit einem an das zu ergreifende Werkstück angepaßten Profil versehen.

Diese Maßnahme hat den Vorteil, daß der Kraftschluß der fremdkraftbetätigten Spannbacken am Werkstück durch einen Formschluß ergänzt werden kann, so daß beispielsweise sehr schwere Werkstücke angehoben werden können und dabei die Hebekraft nur durch die axiale Haltekraft der Spindel, die üblicherweise sehr groß ist, begrenzt ist.

Bei einem weiteren Ausführungsbeispiel der Erfindung ist die Betätigungskraft der Spannbacken einstellbar, vorzugsweise kontinuierlich einstellbar.

Diese Maßnahme hat den Vorteil, daß die Haltekraft der Spannbacken an das Material und die Oberflächenbeschaffenheit des zu bearbeitenden Werkstücks angepaßt werden kann. Ist beispielsweise ein Werkstück bereits mit einer feinbearbeiteten Oberfläche versehen, so kann die Betätigungskraft der Spannbacken sehr klein eingestellt werden, um eine Beschädigung der Oberfläche sicher zu vermeiden.

Bei Ausführungsbeispielen der Erfindung weist ein Greifwerkzeug eine Mehrzahl von Greifelementen auf. Die Spannbacken der Mehrzahl von Greifelementen kann dabei vorzugsweise einzeln betätigbar sein.

Diese Maßnahme hat den Vorteil, daß eine gewisse Anzahl von Werkstücken, beispielsweise vier oder sechs Werkstücke, gleichzeitig ergriffen und in der beschriebenen Weise gehandhabt werden kann. Sind die Werkstücke untereinander uneinheitlich, so kann durch die genannte einzelne Einstellbarkeit der Spannbacken der einzelnen Greifelemente eine unterschiedliche Betätigungskraft oder auch eine unterschiedliche Drehung der einzelnen Werkstücke vorgenommen werden.

Weiterhin wird eine besonders gute Wirkung bei der Erfindung dann erzielt, wenn der Spindelstock neben einem um eine zur Spindelachse parallele Achse drehbaren Werkstücktisch angeordnet ist und zwar derart, daß bei Drehung des Werkstücktisches um jeweils vorzugsweise 180° eine Hälfte des Werkstücktisches im Arbeitsbereich des Spindelstocks angeordnet ist und die eine Hälfte mit einem Werkstückmagazin, die andere Hälfte hingegen mit der Bearbeitungsstation versehen ist.

Diese Maßnahme hat den Vorteil, daß das Werkstückmagazin, ohne daß der Spindelstock weit verfahren werden muß, dem Spindelstock "zugereicht" wird, so daß mittels des Greifelementes ein Werkstück nach erfolgter Bearbeitung zunächst aus der Bearbeitungsstation entnommen und dann nach Drehung des Werkstücktisches um beispielsweise 180° in eine zugehörige Position des Werkstückmagazins eingesetzt werden kann. Das Werkstückmagazin befindet sich bei dieser Vorgehensweise weit außerhalb des Arbeitsbereichsbereichs der Spindel, so daß das Werkstückmagazin mit den teilweise bearbeiteten und teilweise unbearbeiteten Werkstücken nicht durch herumspritzende Bohrflüssigkeit oder herumfliegende Späne verschmutzt wird. Dies hat den Vorteil, daß die Greifelemente beim Auswechseln des Werkstückes stets an sauberen Werkstücken angreifen, ohne daß eine Gefahr besteht, daß ein auf dem unbearbeiteten Werkstück klebender Metallspan das Ergreifen des Werkstücks verhindert oder die Spannbacken des Greifelementes beschädigt.

Besonders bevorzugt ist ferner, wenn das Werkzeugmagazin hufeisenförmig ausgebildet und in einer Ebene senkrecht zur Hochachse des Spindelstocks um diese herum angeordnet ist.

Diese Maßnahme hat den Vorteil, daß eine sehr große Anzahl von Werkzeugen und ggf. auch von Greifelementen in einem einzigen Magazin angeordnet sein kann, das sich in unmittelbarer Nähe des Spindelstocks befindet, so daß auch durch diese kurzen Verfahrwege zwischen Werkzeugmagazin und Aufnahme des Spindelstocks die Rüstzeiten vermindert werden.

Bei einem weiteren Ausführungsbeispiel der Erfindung ist ein weiteres Werkzeugmagazin im Abstand vom Spindelstock angeordnet und ein Werkzeug oder Greifelement wird durch Verfahren des Spindelstocks aus diesem entnommen.

Diese Maßnahme ist von besonderem Vorteil dann, wenn Spezialwerkzeuge oder Spezialgreifwerkzeuge erfindungsgemäß eingesetzt werden sollen, die aufgrund übergroßer Abmessungen keinen Platz in einem üblichen Werkzeugmagazin finden. Dies ist insgesondere dann der Fall, wenn Mehrfachwerkzeuge oder Mehrfachgreifwerkzeuge erfindungsgemäß verwendet werden sollen, mit denen eine Mehrzahl von Werkstücken gleichzeitig bearbeitet bzw. ergriffen werden soll.

Weitere Vorteile ergeben sich aus der Beschreibung und der beigefügten Zeichnung.

Es versteht sich, daß die vorstehend geschilderten und die nachstehend noch erläuternden Merkmale nicht nur in der jeweils angegebenen Kombination, sondern auch in anderen

Kombinationen sowie jeweils in Alleinstellung verwendbar sind, ohne den Rahmen der vorliegenden Erfindung zu verslassen.

Ausführungsbeispiele der Erfindung sind in der Zeichnung dargestellt und werden in der nachfolgenden Beschreibung näher erläutert. Es zeigen:

Fig. 1 eine schematische Gesamtansicht eines Ausführungsbeispiels einer erfindungsgemäßen Werkzeugmaschine;

Fig. 2 in starkvergrößerter Darstellung ein Greifelement, wie es in einen Spindelstock einer erfindungsgemäßen Werkzeugmaschine eingesetzt werden kann.

Fig. 3 eine stark schematisierte Darstellung eines Spindelstocks mit verdrehbarem Greifelement;

Fig. 4 eine Darstellung ähnlich Fig. 3, jedoch für eine Variante hierzu;

Fig. 5 in stark vergrößertem Maßstab Spannbacken eines erfindungsgemäßen Greifelementes mit formschlüssiger Halterung eines Werkstücks;

Fig. 6 eine Darstellung eines Mehrfach-Greifwerkzeuges;

Fig. 7 eine stark schematisierte Ansicht, in verkleinertem Maßstab, eines Spindelstocks mit einem als Drehtisch ausgebildeten Werkstücktisch.

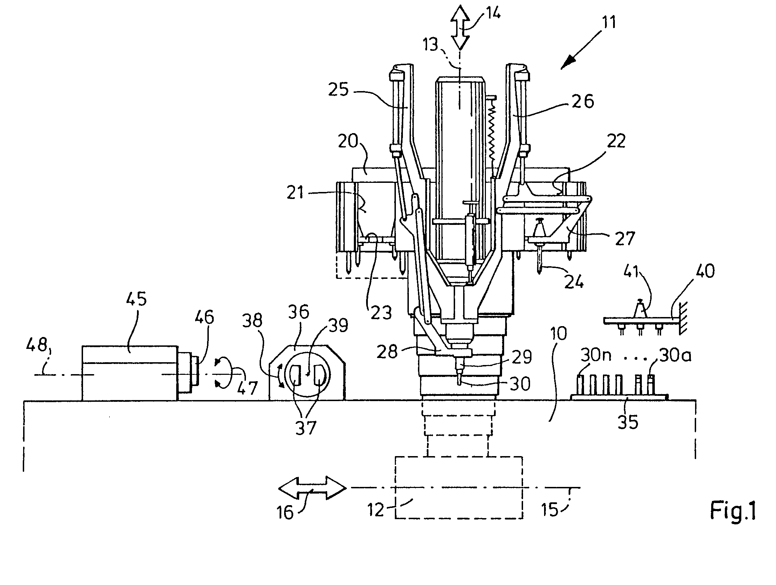

In Fig. 1 ist mit 10 ein Tisch einer Werkzeugmaschine bezeichnet. Die Werkzeugmaschine weist einen Spindelstock 11 auf, der mit einem sehr schematisch angedeuteten Antrieb 12 in einer Hochachse 13 in Richtung eines Doppelpfeiles 14, in einer Längsachse 15 in Richtung eines Doppelpfeiles 16 sowie in einer zu den Achsen 13 und 15 senkrechten Achse verfahrbar ist.

Um den Spindelstock 11 herum ist ein hufeisenförmiges Magazin 20 angeordnet, von dem in der Vorderansicht in Fig. 1 die beiden vorderen Enden zu beiden Seiten des Spindelstocks 11 erkennbar sind. Im Bereich dieser Enden weist das Magazin 20 Öffnungen 21, 22 auf, und es ist in der linken Öffnung 21 in Teil eines endlosen Förderbandes 23 zu erkennen, vermittels dessen Werkzeuge 24 entlang einer doppelt hufeisenförmigen Bahn im Magazin 20 gefördert werden können, so daß sie durch entsprechende Ansteuerung an den Öffnungen 21, 22 zur Entnahme bzw. zum Wiedereinsetzen in das Magazin 20 zur Verfügung stehen.

Am Spindelstock 11 sind ein linker Greifarm 25 sowie ein rechter Greifarm 26 derart angeordnet, daß Spindelstock 11, Magazin 20 und Greifarme 25, 26 gleichermaßen durch den Antrieb 12 verfahren werden. Es ergibt sich somit eine variable Werkzeugwechselebene, durch die die Rüstzeiten beim Werkzeugwechsel vermindert werden.

Man erkennt aus Fig. 1 deutlich, daß der rechte Greifarm 26 sich in der Magazinstellung befindet, in der er ein Werkzeug 24 an seinem freien Ende 27 gerade aus dem Magazin 20 entnommen hat oder gerade in dieses einsetzen wird.

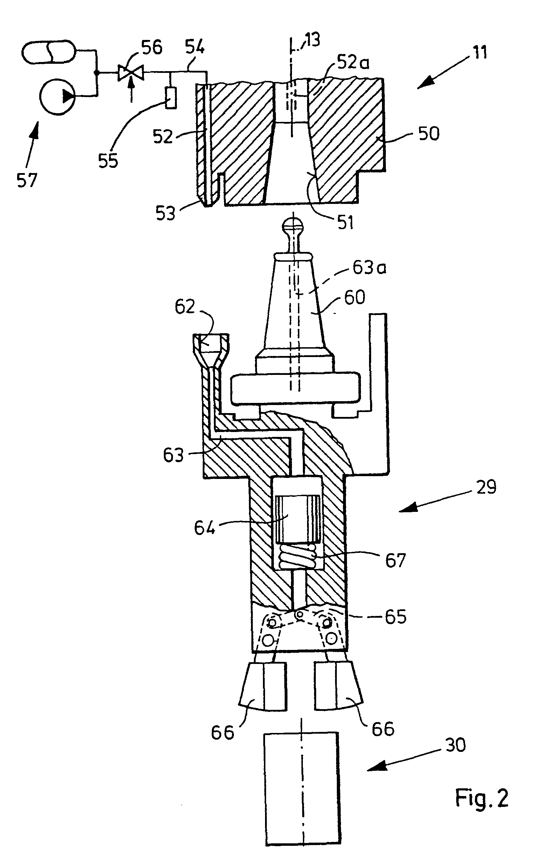

Im Gegensatz dazu befindet sich der linke Greifarm 25 in der Arbeitsstellung, in der er ein Greifelement 29, das nachstehend anhand der Fig. 2 noch im einzelnen erläutert werden wird, in einer Aufnahme des Spindelstocks 11 hält. Am unteren Ende des Greifelementes 29 ist ein Werkstück 30 zu erkennen.

Mit Ausnahme des Greifelementes 29 und des Werkstückes 30 sind sämtliche Einzelheiten des Spindelstocks 11 mit den vorstehend beschriebenen Einzelaggregaten in der älteren Patentanmeldung P 35 21 009.5—14 der Anmelderin beschrieben, deren Offenbarungsgehalt durch diese Bezugnahme zum Offenbarungsgehalt der vorliegenden Patentanmeldung gemacht wird.

Man erkennt aus Fig. 1 weiter, daß sich rechts auf dem Tisch 10 eine Palette 35 mit Werkstücken 30a...30n befindet. Auf der linken Seite des Spindelstocks 11 befindet sich ein erster Teilapparat 36 mit einem Backenfutter 37, das in Richtung eines Pfeiles 38 um eine Achse 39 verdrehbar ist, die senkrecht zur Zeichenebene verläuft.

Links vom ersten Teilapparat 36 befindet sich noch ein zweiter Teilapparat 45 mit Backenfutter 46, das in Richtung eines Pfeiles 47 um eine Achse 48 verdrehbar ist, die parallel zur Längsachse 15 verläuft.

Es versteht sich, daß noch weitere Teilapparate oder sonstige Halter für die Werkstücke 30a...30n in anderen Positionen vorgesehen sein können.

Mit 40 ist in Fig. 1 noch ein externes Werkzeugmagazin bezeichnet, das sich im Abstand vom verfahrbaren Spindelstock 11 an einer vorzugsweise raumfesten Position befindet. Das externe Werkzeugmagazin 40 dient zur Aufnahme spezieller, insbesondere sperriger Werkzeuge oder Greifelemente, die aufgrund ihrer großen Dimensionen nicht im Werkzeugmagazin 20 Platz finden. Dies gilt insbesondere für Mehrfachwekzeuge oder Mehrfach-Greifwerkzeuge, mit denen gleichzeitig eine Mehrzahl von Werkstücken bearbeitet bzw. ergriffen werden kann.

Um ein solches Werkzeug 41 im sogenannten "Pick up"-Betrieb einzuwechseln, wird mittels einer speziellen Programmsteuerung das zuletzt eingespannte Werkzeug bzw. Greifelement mittels eines der Greifarme 25 oder 26 in das Werkzeugmagazin 20 zurücktransportiert. Die Greifarme 25, 26 gehen nun beide in Magazinposition und der Spindelstock 11 wird so verfahren, daß er in den Bereich des externen Werkzeugmagazins 40 gelangt und dort das sperrige Werkzeug 41 unmittelbar mit seiner Spindelaufnahme ergreift. Nach erfolgtem Bearbeitungs- oder Greifvorgang wird das sperrige Werkzeug 41 auf dieselbe Weise wieder in das externe Werkzeugmagazin 40 zurückgebracht und es kann dann das nächste Werkzeug 24 oder Greifelement 29 mittels eines der Greifarme 25 oder 26 aus dem Werkzeugmagazin 20 in die Spindelaufnahme eingesetzt werden.

Die Funktionsweise der Werkzeugmaschine gemäß Fig. 1 ist wie folgt:

Bei Inbetriebnahme der Werkzeugmaschine befinden sich beide Greifarme 25, 26 in Magazinposition, die Palette 35 ist mit unbearbeiteten Werkstücken 30a...30n bestückt, und die Teilapparate 36, 45 sind unbestückt.

Das Förderband 23 wird nun so verfahren, daß das Greifelement 29 an einer der Öffnungen 21, 22 erscheint, wo es von dem Greifarm 25 bzw. 26 der entsprechenden Seite ergriffen wird. Der Greifarm 25 bzw. 26 wird nun in die Arbeitsstellung verstellt und spannt das Greifelement 29 in die Aufnahme des Spindelstocks 11. Der Spindelstock 11 wird nun so verfahren, daß das Greifelement 29 eines der Werkstücke 30a...30n aus der Palette 35 entnehmen kann, und nach Ergreifen des Werkstückes 30 wird dieses zu einem der Teilapparate 36 oder 45 verfahren, je nachdem, welche Bearbeitungsvorgänge vorgesehen sind.

Während dieser Vorgänge hat der jeweils andere Greifarm 25 bzw. 26 das erste benötigte Werkzeug 24 aus einer der Öffnungen 21 oder 22 des Magazins 20 entnommen und steht in Magazinstellung bereit. Sobald nun das Werkstück 30 mittels des Greifelementes 29 in eines der Backenfutter 37 oder 46 eingesetzt wurde, wird das Greifelement 29 aus der Aufnahme des Spindelstocks 11 ausgespannt und durch gegenläufige Bewegung der Greifarme 25, 26 durch das Werkzeug 24 ersetzt.

In entsprechender Weise werden nun nacheinander die gewünschten Werkzeuge 24 eingewechselt, bis sämtliche Bearbeitungsvorgänge am Werkstück 30 ausgeführt sind. Es versteht sich, daß währenddessen der jeweils eingesetzte Teilapparat 36 oder 45 Drehungen des Werkstückes 30 vollführen kann, um beispielsweise geneigte Bohrungen, Anschrägungen o. dgl. anzubringen.

Um das Werkzeug 30 nun zu wechseln, wird wieder das Greifelement 29 mittels der Greifarme 25, 26 eingewechselt, und das Werkstück 30 kann entweder von einem Teilapparat 36 in den anderen Teilapparat 45 überführt oder aber zur Palette 35 zurückgebracht werden.

Die vorstehend geschilderten Vorgänge wiederholen sich nun zyklisch so lange, bis sämtliche Werkstücke 30a...30n vollkommen bearbeitet sind.

Fig. 2 zeigt in stark vergrößerter Darstellung nach Art einer Explosionsdarstellung die Einzelheiten des Greifelementes 29 in bezug auf die Aufnahme des Spindelstocks 11.

In Fig. 2 ist mit 50 das untere Ende des Spindelstocks 11 bezeichnet, das einen Innenkonus 51, insbesondere einen genormten Innenkonus, aufweist.

Bei einem Ausführungsbeispiel der Erfindung ist am Umfang des Spindelstocks 11 eine Druckluftbohrung 52 vorgesehen, die unten in ein erstes Steckteil 53 ausläuft. Die Druckluftbohrung 52 ist an eine Leitung 54 angeschlossen, die einmal zu einem Drucksensor 55 und zum anderen über ein Schaltventil 56 zu einer Druckversorgung 57 führt.

Das Greifelement 29 läuft an seinem oberen Ende in einen Außenkonus 60 aus, der entsprechend dem Innenkonus 51 des Spindelstocks 11 gestaltet ist. Vorzugsweise ist der Außenkonus 60 ein DIN-Kegel, so wie er bei üblichen Werkzeugen von Werkzeugmaschinen anzutreffen ist.

Am oberen Ende des Greifelementes 29 ist ferner ein zweites Steckteil 62 zu erkennen, das bei eingespanntem Greifelement 29 mit dem ersten Steckteil 53 des Spindelstocks 11 zusammenwirkt.

Vom zweiten Steckteil 62 führt ein Kanal 63 zu einer Kolben-Zylinder-Einheit 64, die beispielsweise über ein Kniehebelgetriebe 65 Spannbacken 66 betätigt, mit denen das Werkstück 30 sicher ergriffen werden kann.

Bei einer Variante des Ausführungsbeispiels gemäß Fig. 2 sind statt der am Umfange des Spindelstocks 11 bzw. des Greifelementes 29 angeordneten Druckluftversorgung die entsprechenden Leitungen in der Drehachse, nämlich der Hochachse 13 des Spindelstocks 11 angeordnet, wie mit 52a im Bereich des Spindelstocks 11 und mit 63a im Bereich des Greifelementes 29 angedeutet.

Der Unterschied dieser beiden Ausführungsbeispiele liegt darin, daß bei Anordnung der Druckluftversorgung am Umfang das Greifelement 29 in der Arbeitsposition drehstarr gehalten werden muß und lediglich die Spannbacken 66 betätigt werden können. Wird hingegen die Druckluftversorgung in der Drehachse des Spindelstocks vorgesehen, so kann das Greifelement 29 im eingespannten Zustand verdreht werden, beispielsweise durch den ohnehin vorgesehenen Spindelmotor. Es ist dann möglich, das in die Spannbacken 66 eingespannte Werkstück 30 mit vorgebbarer Drehzahl zu verdrehen. Da der Antrieb des Spindelstocks winkelgenau positionierbar ist, kann somit eine definierte Drehlage des Werkstückes 30 eingestellt werden.

Wird das Greifelement 29 gemäß Fig. 2 in der Aufnahme des Spindelstocks 11 eingespannt, gelangen die Steckteile 53, 62 miteinander in Wirkverbindung, und es kann über das Schaltventil 56 Druckmedium insbesondere Druckluft, auf die Leitungen 52, 63 gegeben werden. Es wird demzufolge die Kolben-Zylinder-Einheit 64 ausgelenkt und über das Kniehebelgetriebe 65 die Spannbacken 66 geschlossen. In diesem Falle erkennt der Drucksensor 55, ohne daß eine separate Verbindung zum Greifelement 26 hergestellt werden müßte, daß infolge des Anstehens von Druck in den Leitungen 52, 63 die Spannbacken 66 geschlossen sein müssen. Wird nun der Druck durch Schließen des Schaltventils 56 wieder abgelassen, werden die Spannbacken 66 wieder geöffnet vorzugsweise selbsttätig durch eine Schraubenfeder 67 in der Kolben-Zylinder-Einheit 64 o.dgl.

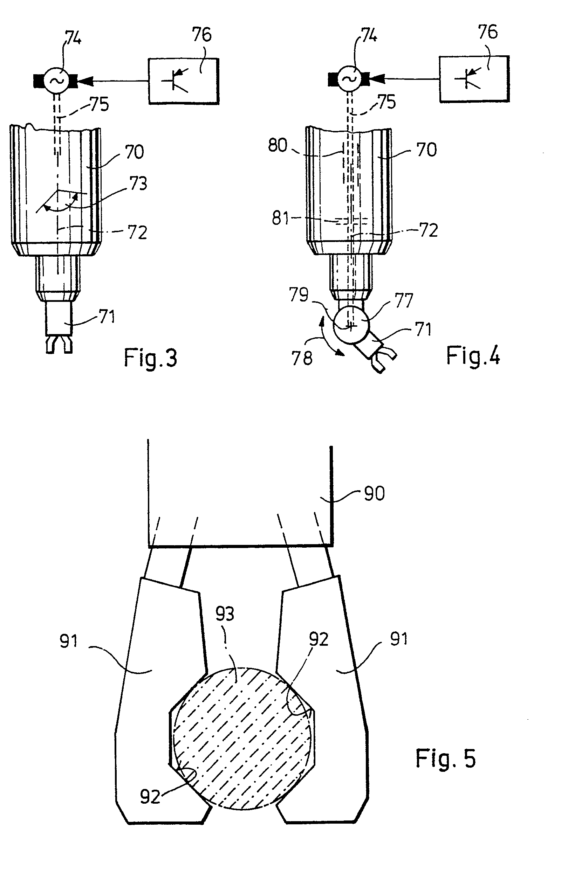

Fig. 3 zeigt in stark schematisierter Darstellung ein Spindelstock 70, in dessen Aufnahme ein Greifelement 71 der vorstehend beschriebenen Art eingesetzt ist. Um das Greifelement 71 um eine Hochachse 72 des Spindelstocks 70 um einen definierten Winkelschritt 73 von beispielsweise 90°, 180° oder dgl. drehen zu können, wird ein Spindelmotor 74, der über eine Wirkverbindung 75, üblicherweise die Spindelaufnahme, mit dem Greifelement 71 verbunden ist mittels einer geeigneten Schrittsteuerung 76 in eine entsprechende Drehung versetzt. Dies ist besonders einfach dann möglich, wenn der Spindelmotor 74 als Schrittmotor ausgebildet ist und die Schrittsteuerung 76 eine bestimmte Anzahl von Impulsen abgibt, die den Spindelmotor 74 dann um einen Winkelschritt definiert so dreht, daß das Greifelement 71 den gewünschten Winkelschritt 73 ausführt. Entsprechendes gilt natürlich dann, wenn im Greifelement 71 selbst ein Drehantrieb vorgesehen ist, der dann unmittelbar von der Schrittsteuerung 76 angesteuert wird und der seine Betätigungskraft und Steuersignale beispielsweise über denselben Weg beziehen kann, wie dies für die Spannbacken 76 in Fig. 2 mit der Druckmittelverbindung bereits erläutert wurde.

Fig. 4 zeigt eine Variante zu Fig. 3, bei der am Greifelement 71 ein Winkelgetriebe 77 angeordnet ist, um das Greifelement 71 um einen Winkelschritt 78 bezüglich einer Querachse 79 drehen zu können, die zur Hochachse 72 senkrecht verläuft.

Um diese Drehbewegung auszuführen, gibt es mehrere Möglichkeiten. Zum einen kann die Drehbewegung des Spindelmotors 74 unmittelbar über das Winkelgetriebe 77 auf das Greifelement 71 übertragen werden. Zum anderen können aber auch eine radiale Kupplung 80 und eine axiale Kupplung 81 vorgesehen sein, um den Spindelmotor 74 alternativ eine Drehung des Greifelementes 71 um die Hochachse 72 (bei aufgetrennter axialer Kupplung 81) oder die Querachse 79 (bei aufgetrennter radialer Kupplung 80) ausführen zu lassen. Selbstverständlich ist es aber auch in diesem Falle möglich, am Greifelement 71 selbst einen entsprechenden Drehantrieb mit zugehöriger Ansteuerung vorzusehen.

Fig. 5 zeigt in starker Ausschnittsvergrößerung ein Greifelement 90 mit Spannbacken 91, die auf ihrer Innenseite mit einem vorgegebenen Profil 92 versehen sind. In dem in Fig. 5 dargestellten Fall hat das Profil 92 die Gestalt eines regelmäßigen Vielecks, um auf diese Weise nicht nur kraftschlüssig sondern auch formschlüssig Werkstücke 93 mit kreisförmigem Querschnitt ergreifen zu können. Die Haltekraft des Greifelementes 90 wird in diesem Falle nicht durch die Betätigungskraft der Spannbacken 91 begrenzt sondern vielmehr durch die Haltekraft der Spindel selbst, in die das Greifelement 90 eingespannt ist.

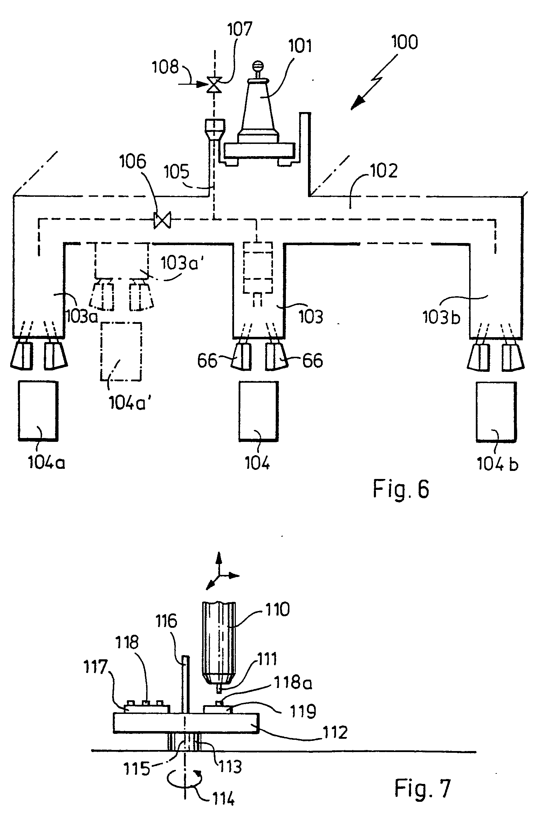

Fig. 6 zeigt in schematisierter Darstellung ein Mehrfach-Greifwerkzeug 100, das mit einem einzigen üblichen Außenkonus 101 und entsprechenden Verbindungsmitteln zum Einspannen in eine Aufnahme einer Spindel ausgestattet ist, wie dies bereits ausführlich zu Fig. 2 für ein einzelnes Greifelement erläutert wurde.

Im Gegensatz zum Ausführungsbeispiel gemäß Fig. 2 weist das Mehrfach-Greifwerkzeug 100 gemäß Fig. 6 jedoch einen Rahmen 102 auf, der an seiner Unterseite mehrere in einer Reihe angeordnete Greifelemente 103, 103a, 103b aufweist. Die Greifelemente können auch in einer Ebene verteilt angeordnet sein, wie in Fig. 6 strichpunktiert mit 103a' angedeutet. Die Greifelemente 103, 103a, 103a', 103b, deren Anzahl durch das Beispiel in Fig. 6 nicht eingeschränkt ist, ergreifen gleichzeitig Werkstücke 104, 104a, 104a', 104b, um diese in der bereits ausführlich geschilderten Weise zu handhaben. Zur Betätigung der Spannbacken 66 der verschiedenen Greifelemente 103, 103a, 103a', 103b kann entweder ein gemeinsamer Kanal 105 zur gleichzeitigen und gleichsinnigen Betätigung vorgesehen sein, es ist jedoch auch möglich, Ventile 106 im Kanal 105 anzuordnen, um Spannbacken 66 oder einzelne Greifelemente definiert unterschiedlich betätigen zu können. Dies gilt auch für möglicherweise vorgesehene Drehantriebe, wie sie weiter oben zu den Fig. 3 und 4 beschrieben wurden und wie sie in gleicher oder unterschiedlicher Ausführung bei den einzelnen Greifelementen 103, 103a, 103a', 103b vorgesehen sein können.

Schließlich zeigt Fig. 6 noch schematisiert mit 107 ein Dosierventil, das in der Energieversorgungsleitung für die Spannbacken 66 angeordnet ist und mittels einer Steuerleitung 108 vorzugsweise stufenlos einstellbar ist. Über die Steuerleitung 108 kann damit die Betätigungskraft der Spannbacken 66 feinfühlig eingestellt werden, um bei leichten und schweren Werkstücken bzw. bei Werkstücken mit unbearbeiteter oder feinbearbeiteter Oberfläche eine geeignete Spannkraft ausüben zu können.

Schließlich ist in Fig. 7 noch eine Konfiguration einer Werkzeugmaschine dargestellt, bei der sich ein Spindelstock 110 mit eingespanntem Werkzeug oder Greifelement 111 neben einem als Drehtisch 112 ausgebildeten Werkstücktisch befindet. Der Drehtisch 112 ruht auf einer vertikalen Welle 113, mittels derer er um einen Winkel 114 von vorzugsweise alternierend 180° um eine Hochachse 115 drehbar ist, die zur Spindelachse parallel ist.

In der Mitte des Drehtisches 112 befindet sich vorzugsweise ein Spritzschutzwand 116, um die in Fig. 7 linke Hälfte des Drehtisches 112, die sogenannte Bestückungsseite, von der rechten Hälfte des Drehtisches 112, der sogenannten Bearbeitungsseite, zu trennen.

In der Darstellung von Fig. 7 befindet sich auf der Bestükkungsseite ein Werkstückmagazin 117 mit Werkstücken 118. Auf der Bearbeitungsseite befindet sich eine Einspannvorrichtung bzw. ein Teilapparat 119, in den ein einzelnes Werkstück 118a eingespannt ist.

Die Wirkungsweise der Anordnung gemäß Fig. 7 ist wie folgt:

In der in Fig. 7 dargestellten Phase wird das Werkstück 118a mittels des Werkzeuges 111 zunächst vollständig bearbeitet. Es wird nun ein Greifelement der weiter oben beschriebenen Art eingewechselt und das Werkstück 118a aus dem Teilapparat 119 entnommen. Der Drehtisch 112 wird um 180° gedreht und das bearbeitete Werkstück 118a in eine freie Position des Werkstückmagazins 117 eingesetzt. Danach entnimmt das Greifelement aus dem Werkstückmagazin 117 ein neues, noch unbearbeitetes Werkstück. Der Drehtisch 112 dreht sich nun um 180° wieder in die in Fig. 7 eingezeichnete Stellung zurück und das Greifelement setzt das unbearbeitete Werkstück in den Teilapparat 119 ein, wo es nach Einwechseln eines geeigneten Werkzeuges dann bearbeitet wird. Die Spritzschutzwand 116 dient dabei dazu, das Werkstückmagazin 117 auf der Bestückungsseite vor herumspritzendem Bohröl oder herumfliegenden Spänen zu schützen.

**Patentansprüche**

1. Bohr- und Fräsmaschine mit einem entlang mehrerer Achsen (13, 15) relativ zu einem Werkstücktisch (10; 112) bewegbaren Spindelstock (11; 70; 110), mit einem Werkzeugmagazin (20; 40) und Mitteln, vermittels derer Werkzeuge (24, 29; 100; 111) mit genormtem Außenkonus (60; 101) aus einer Magazinstellung im Werkzeugmagazin (20) in eine Arbeitsstellung einer Aufnahme des Spindelstocks (11; 70; 110) mit genormtem Innenkonus (51) bringbar sind oder umgekehrt, wobei im Arbeitsraum des Spindelstocks (11; 70; 110) mindestens ein Werkstückmagazin (35; 117) zur Aufnahme von Werkstücken (30, 30a...30n; 104, 104a, 104a', 104b; 118, 118a) vorgesehen ist und mindestens eines der Werkzeuge als Greifelement (29; 71; 90; 103, 103a, 103a', 104; 114) ausgebildet ist zum Ergreifen eines der Werkstücke (30, 30a...30n; 104, 104a, 104a', 104b; 118, 118a) in dem Werkstückmagazin (35; 117) und zum Überführen in eine auf dem Werkstücktisch (10; 112) angeordnete Bearbeitungsstation (36, 45; 119) zum Halten des Werkstücks (30, 30a... 30n; 104, 104a, 104a', 104b; 118, 118a) für dessen unmittelbar nachfolgende Bearbeitung mittels eines der Werkzeuge (24; 111), dadurch gekennzeichnet, daß das Werkzeugmagazin (20) am Spindelstock (11; 70; 110) angeordnet ist, daß mindestens zwei Greifarme (25, 26) vorgesehen sind, die im Gegentaktbetrieb ein Werkzeug (24; 111) oder das Handhabungselement aus dem Werkzeugmagazin (20) entnehmen und in die Aufnahme des Spindelstocks (11) einsetzen bzw. umgekehrt, daß das Greifelement (29; 71; 90; 103, 103a, 103a', 104; 111) mit fremdkraftbetätigten Spannbacken (66; 91) versehen ist, und daß die Aufnahme des Spindelstocks (11; 70; 110) ein Verbindungselement (53, 62) enthält, das bei in die Aufnahme eingesetztem Greifelement (29) eine im Spindelstock (11) angeordnete Druckmittelleitung (52, 52a) mit einem druckmittelbetriebenen Antrieb (64—67) des Greifelements (29) verbindet.

2. Maschine nach Anspruch 1, dadurch gekennzeichnet, daß die Druckmittelleitung (52) am Umfang des Spindelstocks (11) angeordnet ist.

3. Maschine nach Anspruch 1, dadurch gekennzeichnet, daß die Druckmittelleitung (52a) in der Drehachse (13) des Spindelstocks (11) angeordnet ist.

4. Maschine nach einem der Ansprüche 1 bis 3, dadurch gekennzeichnet, daß ein Drucksensor (55) an die Druckmittelleitung (52, 52a) angeschlossen ist.

5. Maschine nach einem der Ansprüche 1 bis 4, dadurch gekennzeichnet, daß eine Schrittsteuerung (76) vorgesehen ist, um einen Spindelmotor (74) derart zu steuern, daß die Spindel bei eingesetztem Greifelement (71) dieses um einen vorgegebenen Winkelschritt (73, 78) um die Drehachse (72) oder um eine Achse (79) senkrecht dazu dreht.

6. Maschine nach Anspruch 5, dadurch gekennzeichnet, daß Kupplungen (80, 81) im Spindelstock (70) vorgesehen sind, um wahlweise den Winkelschritt (73, 78) um die Drehachse (72) oder die dazu senkrechte Achse (79) auszuführen.

7. Maschine nach einem der Ansprüche 1 bis 3, dadurch gekennzeichnet, daß die Spannbacken (91) mit einem an das zu ergreifende Werkstück (93) angepaßten Profil (92) versehen sind.

8. Maschine nach einem der Ansprüche 1 bis 7, dadurch gekennzeichnet, daß die Betätigungskraft der Spannbacken (66; 91) einstellbar ist.

9. Maschine nach einem der Ansprüche 1 bis 8, dadurch gekennzeichnet, daß ein Greifwerkzeug (100) eine Mehrzahl von vorzugsweise einzeln betätigbaren Greifelementen (103, 103a, 103a', 104) aufweist.

10. Maschine nach einem der Ansprüche 1 bis 9, dadurch gekennzeichnet, daß der Spindelstock (110) neben einem um eine zur Spindelachse parallele Achse (115) drehbaren Werkstücktisch (112) angeordnet ist, derart, daß bei Drehung des Werkstücktisches (112) um jeweils vorzugsweise 180° eine Hälfte des Werkstücktisches (112) im Arbeitsbereich des Spindelstocks (110) angeordnet ist und daß die eine Hälfte mit einem Werkstückmagazin (117), die andere Hälfte hingegen mit der Bearbeitungsstation (119) versehen ist.

11. Maschine nach einem der Ansprüche 1 bis 10, dadurch gekennzeichnet, daß das Werkzeugmagazin (20) hufeisenförmig ausgebildet und in einer Ebene senkrecht zur Hochachse (13) des Spindelstocks (11) um diesen herum angeordnet ist.

12. Maschine nach einem der Ansprüche 1 bis 11, dadurch gekennzeichnet, daß ein weiteres Werkzeugmagazin (40) im Abstand vom Spindelstock (11; 70; 110) angeordnet ist und daß ein Werkzeug (41) oder Greifelement (41) durch Verfahren des Spindelstocks (11; 70; 110) aus diesem entnommen wird.

**Revendications**

1. Machine à aléséret à fraiser avec une poupée porte-broche (11; 70; 110) pouvant se mouvoir le long de plusieurs axes (13; 15) par rapport à une table porte-pièce (10; 12), avec un magasin d'outils (20; 40) et des moyens, par l'entremise desquels des outils (24; 29; 100; 111) avec un cône extérieur normalisé (60; 101) peuvent être sortis d'un emplacement dans le magasin, d'outils (20) et placés en position de travail dans un logement de la poupée porte-broche (11; 70; 110) avec un cône intérieur normalisé (51) ou vice-versa, et selon laquelle, dans l'espace de travail de la poupée porte-broche (11; 70; 110) au moins un magasin (35; 117) est prévu pour la réception des pièces d'oeuvre (30; 30a...30n; 104, 104a, 104a', 104b; 118, 118a) et qu'un des outils au moins est conçu comme élément de préhension (29; 71; 90; 103, 103a, 103a', 104) pour saisir une des pièces d'oeuvre (30, 30a...30n; 104, 104a, 104a', 104b; 118, 118a) dans le magasin de pièces d'oeuvre (35; 117) et pour la transférer dans une des stations de travail (36, 45; 119) agencée sur la table porte-pièce (10; 112) pour maintenir la pièce d'oeuvre (30, 30a...30n; 104, 104a, 104a', 104b; 118, 118a) pendant son usinage immédiatement subséquent au moyen d'un des outils (24; 111), caractérisé en ce que le magasin d'outils (20) est disposé sur la poupée porte-broche (11; 70; 110), en ce qu'au moins deux bras de préhension (25; 26) sont prévus, qui sortent un outil (24; 111) ou l'élément manipulateur du magasin d'outils (20) en exploitation symétrique et les placent dans le logement de la poupée porte-broche (11) ou vice-versa, en ce que l'élément de préhension (29; 71; 90; 103, 103a, 103a', 104; 111) est équipé de griffes de serrage (66; 91) actionnées par une force extérieure et en ce que le logement de la poupée porte-broche (11; 70; 110) comprend un raccord (53, 62) qui relie, à proximité de l'élément de préhension (29) dans le logement, une conduite de fluide sous pression (52, 52a) située dans la poupée porte-broche (11) avec la commande (64, 67) par le fluide sous pression de l'élément de préhension (29).

2. Machine selon la revendication 1, caractérisée en ce que la conduite de fluide sous pression (52) est placée à la périphérie de la poupée porte-broche (11).

3. Machine selon la revendication 1, caractérisée en ce que la conduite de fluide sous pression (52a) est placée dans l'axe de rotation (13) de la poupée porte-broche (11).

4. Machine selon une des revendications 1 à 3 caractérisée en ce qu'un détecteur de pression (55) est raccordé à la conduite de fluide sous pression (52, 52a).

5. Machine selon une des revendications 1 à 4, caractérisée en ce qu'une commande pas-à-pas (76) est prévue pour commander un moteur de broches de façon à ce que l'axe, lorsque l'élément de préhension (71) est en action (71), fasse tourner celui-ci selon un mouvement angulaire (73, 78) autour de l'axe de rotation (72) ou autour d'un axe qui lui est perpendiculaire.

6. Machine selon la revendication 5, caractérisée en ce que des raccords (80, 81) sont prévus dans la poupée porte-broche (70) pour effectuer à volonté le mouvement angulaire (73, 78) à volonté autour de l'axe de rotation (72) ou autour de l'axe qui lui est perpendiculaire (79).

7. Machine selon une des revendications 1 à 3, caractérisée en ce que les griffes de serrage (91) sont pourvues d'un profil adapté (92) à la pièce d'oeuvre (93) à saisir.

8. Machine selon une des revendications 1 à 7, caractérisée en ce que la force d'actionnement des griffes de serrage (66; 91) peut être réglée.

9. Machine selon une des revendications 1 à 8, caractérisée en ce qu'un outil de préhension (100) présente une multiplicité d'éléments de préhension (103, 103a, 103a', 104) pouvant de préférence être actionnés individuellement.

10. Machine selon une des revendications 1 à 9, caractérisée en ce que la poupée porte-broche est disposée près d'une table porte-pièce (112) tournant autour d'un axe parallèle (115) à l'axe de rotation de façon telle que, lors de la rotation de la table porte-pièce (112), à chaque fois de préférence de 180°, une moitié de la table porte-pièce (112) soit placée dans le champ de travail de la poupée porte-broche (110) et qu'une moitié soit dotée d'un magasin d'outils (117), l'autre moitié à l'opposé étant dotée par du poste de travail (119).

11. Machine selon une des revendications 1 à 10, caractérisée en ce que le magasin d'outils (20) a la forme d'un fer à cheval et est disposé dans un plan perpendiculaire à l'axe haut (13) de la poupée porte-broche (11) autour de cette dernière.

12. Machine selon une des revendications 1 à 11, caractérisée en ce qu'un magasin d'outils supplémentaire (40) est disposé à distance de la poupée porte-broche (11; 70; 110) et en ce que l'outil (41) ou l'élément de préhension (41) en est extrait par une action de la poupée porte-broche (11; 70; 110).

**Claims**

1. A drilling and milling machine comprising a spindle stock (11; 70; 110) being displaceable along several coordinate directions (13, 15) relative to a workpiece table (10; 112), further comprising a tool magazine (20; 40) and comprising means for transferring tools (24, 29; 100; 111) having a standardized outer taper (60; 101) from a magazine position in the tool magazine (20) to a working position in a receptacle of the spindle stock (11; 70; 110) having a standardized inner taper (51), and vice versa, a workpiece magazine (35; 117) for receiving workpieces (30, 30a...30n; 104, 104a, 104a', 104b; 118, 118a) being provided within the operating area of the spindle stock (11; 70; 110), at least one of the tools being designed as a gripper element (29; 71; 90; 103, 103a, 103a', 104; 114) for gripping one of the workpieces (30, 30a...30n; 104, 104a, 104a', 104b; 118, 118a) within the workpiece magazine (35; 117) and for transferring same to one processing station (36, 45; 119) being arranged on the workpiece table (10; 112) for holding the workpiece (30, 30a...30n; 104, 104a, 104a', 104b; 118, 118a) for the machining thereof immediately thereafter by means of one of the tools (24; 111), characterized in that tool magazine (20) is arranged at the spindle stock (11; 70; 110), that at least two gripper arms (25, 26) are provided for picking up a tool (24; 111) or the handling element, in a push-pull operation, from the tool magazine (20) and inserting same into the receptacle of the spindle stock (11), and vice versa, that the gripper element (29; 71; 90; 103, 103a, 103a', 104; 111) is provided with servo-operated chucking jaws (66; 91), and that the receptacle of the spindle stock (11; 70; 110) comprises a connection element (53; 62) for connecting a pressure fluid line (52, 52a) provided within the spindle stock (11) to a pressure fluid operated drive (64—67) of the gripper element (29) when the gripper element (29) is inserted into the receptacle.

2. The machine of Claim 1, characterized in that the pressure fluid line (52) is disposed at a periphery of the spindle stock (11).

3. The machine of Claim 1, characterized in that the pressure fluid line (52a) is disposed along a rotating axis (13) of the spindle stock (11).

4. The machine of any of Claims 1 through 3, characterized in that a pressure sensor (55) is connected to the pressure fluid line (52, 52a).

5. The machine of any of Claims 1 through 4, characterized in that a stepping control (76) is provided for controlling a spindle motor (74) such that the spindle, with a gripper element (71) inserted therein, rotates the gripper element (71) by a predetermined angular step (73, 78) about the rotating axis (72) or about an axis (79) being perpendicular thereto.

6. The machine of Claim 5, characterized in that clutches (80, 81) are provided in the spindle stock (70) for executing, as selected, the angular step (73, 78) either about the rotating axis (72) or about the axis (79) being perpendicular thereto.

7. The machine of any of Claims 1 through 3, characterized in that the chucking jaws (91) are provided with a profile (92) adapted to the workpiece (93) to be gripped.

8. The machine of any of Claims 1 through 7, characterized in that the actuating force of the chucking jaws (66; 91) may be adjusted.

9. The machine of any of Claims 1 through 8, characterized in that a gripper tool (100) is provided with a plurality of gripper elements (103, 103a, 103a', 104) being each preferably operable individually.

10. The machine of any of Claims 1 through 9, characterized in that the spindle stock (110) is arranged adjacent a workpiece table (112) being pivotable about an axis (115) extending parallel to the spindle axis such that when the workpiece table (112) is pivoted by, preferably, 180° steps each, one half of the workpiece table (110) is disposed within the operating area of the spindle stock (110), the one half being provided with a workpiece magazine (117), whereas the other half is provided with the processing station (119).

11. The machine of any of Claims 1 through 10, characterized in that the tool magazine (20) is shaped like a horseshoe and is arranged in a plane perpendicular to the vertical axis (13) of the spindle stock (11) and is arranged around that axis (13).

12. The machine of any of Claims 1 through 11, characterized in that a further tool magazine (40) is provided at a distance from the spindle stock (11; 70; 110), a tool (41) or gripper element (41) being picked up therefrom by displacing the spindle stock (11; 70; 110).

Fig.1

EP 0 216 261 B1

Fig. 2

Fig.3

Fig.4

Fig. 5

Fig. 6

Fig. 7